# EUROPEAN PATENT APPLICATION

(11) **EP 4 790 582 A1**
(43) Date of publication of application: **12.08.2026**
(21) Application number: 25155999.3
(22) Date of filing: 05.02.2025
(51) Int. Cl.: G06F 30/17, G06T 17/00, G06F 111/10, G06F 113/14

(54) **PARAMETRIC MODEL GENERATION BASED ON CONSTRAINED GEOMETRIC PARAMETERS**

(71) Applicant: Leica Geosystems AG, 9435 Heerbrugg (CH)
(72) Inventor: BEY, Aurélien, 69120 Vaulx-en-Velin (FR)
(74) Representative: Kaminski Harmann

(57) **Abstract**

The present invention relates to a computer-implemented method 1 for generating a parametric model 13 of a physical structure 36 based on point cloud data, the point cloud data describing a point cloud comprising points 14 acquired in an environment 34 in which the physical structure 36 is located, wherein the physical structure 36 comprises a plurality of parts, wherein the plurality of parts are arranged as an interconnected chain of parts that are physically connected, the method 1 comprising: acquiring the point cloud data 100, the point cloud data comprising geometry information of the environment 34; acquiring geometry information of a set of predefined geometric shapes related to the plurality of parts 200; performing a classification on the point cloud data 300 to detect parts of the plurality of parts in the point cloud data 301 based on the geometry information; assign to each detected part of the plurality of parts a set of points of the point cloud 302; and detect physical connections 5 of two or more detected parts 2, 3 of the plurality of parts 303; and generating 400 a parametric model 13 of the physical structure 36 based on the detected physical connections 5 of the two or more detected parts 2, 3 of the plurality of parts and the geometry information of the set of predefined geometric shapes, wherein the method 1 further comprises deriving geometric parameters 23, 24, 29 for each detected part 2, 3 of the plurality of parts from the geometry information of the set of predefined geometric shapes, wherein generating 400 the parametric model 13 of the physical structure 36 is further based on the derived geometric parameters 23, 24, 29 for each detected part 2, 3 of the plurality of parts, wherein at least one of the derived geometric parameters 23, 24, 29 of a preceding part 2 is used as a constraint for at least one of the geometric parameters 23, 24, 29 of a subsequent part 3 physically connected to the preceding part 2.

## Description

### FIELD OF THE INVENTION

The present invention relates to a computer-implemented method for generating a parametric model of a physical structure based on point cloud data.

### BACKGROUND OF THE INVENTION

Computer implemented methods for the generation of parametric models of larger physical structures consisting of many different and physically connected parts based on point cloud data are known from the prior art.

An example of such a physical structure is a pipeline system in which many pipes are arranged in a row and physically connected to each other. The point cloud data describes a point cloud that is provided, for example, by a laser scanner that has scanned the environment in which the pipeline system is located.

Some of these prior art methods rigidly create the parametric model of the structure based on the obtained point cloud. However, due to this very strict creation of the model based on the points of the point cloud, it can occur that when connecting two parts of the structure during modeling, there is a misalignment / misposition of the end pieces of the two parts to be connected. Especially when creating a parametric model of a pipeline system, such a faulty connection would be fatal, as the created model would no longer be airtight / watertight. However, such a faulty model would also be problematic for other structures, such as a support structure consisting of many beams, as this would result in a lack of stability.

Other prior art methods, however, create the parametric model in such a way that the subsequent part is modeled to be perfectly connected to the previous part, but the points of the point cloud are largely disregarded. In this way, the model of the structure can be created without misalignment/misposition of the end pieces of the parts, but a deviation of the respective modeled part from the points of the point cloud can continue over the entire structure, respectively even added up, whereby the deviation can become larger and larger as the number of modeled parts increases.

In both cases of prior art methods, the generated model has to be laboriously reworked and corrected by the user.

Thus, there is a need for an improved computer-implemented method to create a parametric model of a physical structure. In particular, there is a need for an improved computer-implemented method that uses a further criterion in addition to the physical connections for the creation of the parametric model.

### OBJECT OF THE INVENTION

It is therefore an object of the invention to provide a computer-implemented method, a reality-capture device and a computer program product that overcome the disadvantages of the prior art.

It is a further object of the invention to provide a computer-implemented method that uses a further criterion in addition to the physical connections for the creation of the parametric model.

These objects are achieved by realizing at least part of the features of the independent claims. Features which further develop the invention in an alternative or advantageous manner are described in the dependent patent claims.

### SUMMARY OF THE INVENTION

The present invention relates to a computer-implemented method for generating a parametric model of a physical structure based on point cloud data, the point cloud data describing a point cloud comprising points acquired in an environment in which the physical structure is located, wherein the physical structure comprises a plurality of parts, wherein the plurality of parts are arranged as an interconnected chain of parts that are physically connected, the method comprising:
- acquiring the point cloud data, the point cloud data comprising geometry information of the environment;
- acquiring geometry information of a set of predefined geometric shapes related to the plurality of parts;
- performing a classification on the point cloud data to
   ∘ detect parts of the plurality of parts in the point cloud data based on the geometry information;
   ∘ assign to each detected part of the plurality of parts a set of points of the point cloud; and
   ∘ detect physical connections of two or more detected parts of the plurality of parts; and
- generating a parametric model of the physical structure based on the detected physical connections of the two or more detected parts of the plurality of parts and the geometry information of the set of predefined geometric shapes,

wherein the method further comprises deriving geometric parameters for each detected part of the plurality of parts from the geometry information of the set of predefined geometric shapes, wherein generating the parametric model of the physical structure is further based on the derived geometric parameters for each detected part of the plurality of parts, wherein at least one of the derived geometric parameters of a preceding part is used as a
constraint/limitation/restriction for at least one of the geometric parameters of a subsequent part physically connected to the preceding part.

In other words, the computer-implemented method according to the invention uses the ending interface of a part to constrain the parameters of the subsequent connected part to build the full parametric model. The generation of the parametric model of the physical structure comprises an identification of parts/elements, e.g. straight pipe, elbow, etc., in the point cloud. This is performed automatically by an appropriate algorithm. Particularly, AI-based methods of point cloud classification, semantic segmentation and/or instance segmentation can be used to identify the individual elements/parts and the set of point assigned to each element/part. The generation of the parametric model of the physical structure further comprises an identification of connections between the parts and combining these parts to one connected section and the derivation of constraints that are considered in the optimization. For example, to ensure a smooth transition from a straight pipe (cylinder) to an elbow (section of a torus) a "same radius" can be formulated. Moreover, a "tangent point" constrained should assure that the end point of the cylinder and the starting point of the torus have the exact same coordinates and that the tangent in this point is the same.

The assignment of which of two sequential or consecutive parts of the structure is the preceding part and which is the subsequent part depends on the part of the physical structure from which the model is created/generated and via which parts adjoining this part. Of two parts of the physical structure to be modeled along this "creation sequence" / "creation direction", the part modeled first is accordingly the preceding part and the part connected to the preceding part via a physical connection and subsequently modeled is the subsequent part.

This subsequent part can then, of course, be followed by a further part whose at least one of the geometric parameters is to be constrained by at least one of the derived geometric parameters in accordance with the method according to the invention. This further part now represents the subsequent part accordingly, while the part assigned from subsequent part in the above example now represents the preceding part. This alternating assignment of preceding part and subsequent part extends through the entire physical structure in accordance with the modeling sequence of physically connected parts.

The term "physically connected" or "physical connection" is understood to mean both a connection via a separate connecting part, e.g. a pipe connector, as well as direct physical contact and fixing of the two parts, e.g. by welding, clamping, etc. The two parts can also be physically connected by screwing a thread of one part to a mating thread of the other part. Another example of a physical connection, which also illustrates that the term "physically connected" or "physical connection" can be understood to mean various connection options, is the connection of a respective flange of the two parts by, for example, a clamp applied to the outside of the flanges.

In an exemplary embodiment of the computer-implemented method according to the invention, the at least one of the geometric parameters of the subsequent part physically connected to the preceding part can be constrained by the at least one of the geometric parameters of the preceding part by setting equal geometric parameters being the same in the preceding part and the subsequent part.

Optionally, an outer diameter of the subsequent part can be constrained by an outer diameter of the preceding part by setting the outer diameter of the subsequent part equal to the outer diameter of the preceding part; and/or an inner diameter of the subsequent part can be constrained by an inner diameter of the preceding part by setting the inner diameter of the subsequent part equal to the inner diameter of the preceding part.

In other words, the full parametric model is a collection of constrained parametric shapes. It has access to all the free parameters, and can thus be seen as a parametric shape itself.

In a further exemplary embodiment, the computer-implemented method according to the invention can further comprise optimizing the generated parametric model of the physical structure with respect to the point cloud.

Optionally, optimizing the generated parametric model of the physical structure can comprise weighted least squares.

According to this, the distance between a point and the full parametric model can be calculated, which enables the fitting algorithm to evaluate the errors at each step. Further, the distance from each individual parametric shape to a point can be computed. The distance to the full model is then the minimal distance to individual shapes. The fitting behavior can be controled by bounding the points to their initial closest shape. This makes the distance computation faster and the results more stable.

In a further exemplary embodiment of the computer-implemented method, the optimizing can be performed based on the constraint for the at least one of the geometric parameters of the subsequent part physically connected to the preceding part. Alternatively or additionally, the optimizing can be performed by reducing, for at least one point of the set of points assigned to a detected part of the plurality of parts, a distance between the at least one point and a predefined geometric shape related to the detected part of the plurality of parts to which the set of points comprising the at least one point is assigned; and/or the generated parametric model of the physical structure.

In other words, in the optimization the parameters of the geometric elements (e.g. cylinder, cone, section of torus, etc.) representing the parts (e.g. straight pipe, reducer, elbow, etc.) belonging to a section are determined. Hence, the normal distance between the points assigned to a part to the corresponding geometric element is minimized for all the points and geometric elements of the section.

A disadvantage of prior art computer programs for creating a model of a physical structure, e.g. a pipeline system, from point cloud data is that none of these programs is able to fit a whole structure consisting of two or more connected elements/parts at once to a point cloud. In particular, the processing of the structure after separate parts have been connected and merged into a single structure poses a problem for prior art solutions, since the common propagation algorithms based on heuristics do not make it possible to fit this merged structure as a whole to the point cloud.

Further disadvantages of the prior art computer programs are that they lose the "likelihood" of the reconstructed structure against the point cloud during the reconstruction/reconnection process and that they take the risk of corrupting the reconstructed data by attempting to maintain this "likelihood" based on a heuristic approach.

The need for a global fitting algorithm arises when addressing the problem of connecting two parts with a junction element, e.g. a welding seam or a separate connecting part. Usually, the part endings to connect do not necessarily match (e.g. small differences in terms of pipe radius, position or alignment can occur).

Thus, at least one of the parts, e.g. a pipeline, has to be slightly modified so that the merged structure, e.g. pipeline system, is still watertight. However, simply aligning and resizing the pipelines to keep the result watertight can cause the pipeline model to move further away from the points from which it has been extracted and to no longer match the point cloud. This shift can become significant for very long pipelines, especially because of the rotational component of the correction that gets amplified by the long distances, also called "lever" effect.

A heuristic approach, as known in the prior art, which propagates the connection constraints through the structure, thereby keeping each individual part as aligned as possible with the point cloud before considering the next part in the structure, could lead to highly erroneous results as the errors propagate as well.

The use of a global fitting approach such as in the method according to the invention guarantees that the consistency of the structure is maintained throughout the fitting process. And the fitting algorithm itself finds the optimal solution in terms of the distances to the measurement points, under some assumptions about the initial state.

In other words, the global fitting algorithm aims at a set of parts provided as an initial guess of the optimal solution to be found (possibly with additional constraints) with strong structural constraints arising from the connections between consecutive parts.

Another benefit of this approach is that it allows to update any parameter for any part in the structure, anytime. The fitting algorithm is able to re-evaluate all the other geometric parameters to re-adjust the resulting part to the point cloud. An exemplary use case for this is when the bend angle of an elbow pipe in close to 90°, but not exactly 90°. There is the ability to "correct" the elbow anytime, e.g. to force the rounded angle while keeping the whole pipeline as close to the points as possible.

However, the method according to the invention is not limited to the global fitting approach. In the situation where two parts are to be connected, the entire structure does not have to be fitted. Assuming that the first half is good enough, the method only needs to fit the second half. In fact, the ending interface of the first part, e.g. a pipeline, can be used as the constraint for the connecting element and inserted into the fitting algorithm as the initial constraint. In other words, the algorithm can handle the partial fitting of a structure, not necessarily the entire structure.

In a further exemplary embodiment, additional constraints can be provided to the global fitting (= optimizer), that are not constraints arising from the structure of the parts. That can be constraints coming from external indications (e.g. provided by the user), other than the connection between consecutive parts/elements along the structure.

In a further embodiment, the method can further comprise grouping together two or more detected parts of the plurality of parts that are physically connected to form a subsection; grouping one or more subsections into a subsection group; and optimizing all subsections of a subsection group jointly.

Optionally, grouping together at least two detected parts of the plurality of parts and/or grouping one or more subsections into a subsection group can be provideable by a manual input of a user.

In other words, instead of optimizing the parts individually, all parts of the structure can be objective of a global optimization approach. In general, the user is flexible in combining parts to subsections and to group them together for a joint optimization. Optionally, this can be supported by a graphical user interfaces, e.g. a tree view, that allows this grouping and combinations in a comfortable way.

In a further embodiment, the method can further comprise acquiring a value for at least one geometric parameter of at least one detected part of the plurality of parts; and setting the value for the at least one geometric parameter so that the value for the at least one geometric parameter is not changed by the optimizing.

Optionally, the value for the at least one geometric parameter can be provideable by a manual input of a user and/or can be derivable from a comparison of the at least one detected part of the plurality of parts with a catalog of parts that are usable for a construction of the physical structure.

In other words, there are constraints that can be introduced manually. For example, if the radius of a pipe is known, e.g. from a data sheet, this parameter can be introduced as a constraint. This means that the parameter will be set to the specific value and not changed by the optimization.

In a further embodiment, the method can further comprise acquiring information regarding an orientation of at least one detected part of the plurality of parts in a Cartesian coordinate system (e.g. a two-dimensional Cartesian coordinate system or a three-dimensional Cartesian coordinate system); and if the orientation of the at least one detected part of the plurality of parts meets a predefined criterion, in particular an orientation parallel to one of the axis of the Cartesian coordinate system (e.g. an orientation parallel to the X-axis also referred to as horizontally or an orientation parallel to the Y-axis/Z-axis, dependent on the dimensionality of the Cartesian coordinate system, also referred to as vertically), setting the orientation of the at least one detected part of the plurality of parts so that the orientation of the at least one detected part of the plurality of parts is not changed by the optimizing.

Optionally, the orientation of the at least one detected part of the plurality of parts in the Cartesian coordinate system can be provideable by a manual input.

In a further embodiment, in course of the optimizing
- the two or more detected parts of the plurality of parts for which physical connections have been detected can not be separable from each other in the generated parametric model of the physical structure; **and/or**
- at least one detected part of the plurality of parts can be interchangeable with a part from a catalog of parts that are usable for a construction of the physical structure; and/or
- at least one detected part of the plurality of parts can be removable from the generated parametric model of the physical structure; and/or
- a part from the catalog of parts that are usable for the construction of the physical structure can be insertable in the generated parametric model of the physical structure.

In other words, parts can be added/removed during the optimization process to give even more flexibility to the optimizer. This gives more power to the optimization process as it would get rid of the limitations set by the initial physical structure that might not be appropriate to find the actual optimal solution.

In a further embodiment, the classification on the point cloud data can comprise point cloud classification. Optionally, the point cloud classification comprises artificial intelligence; semantic segmentation; and/or instance segmentation.

In a further embodiment, the set of predefined geometric shapes can comprise cylinders; cones, in particular truncated asymmetric cones; torus sections; and/or intersections.

Optionally, if the physical structure is configured as a pipeline system, cylinders can be related to straight pipes, cones can be related to reducers or expansions, torus sections can be related to pipe elbows, and/or intersections can be related to pipe branches.

In other words, the algorithm automatically builds a full watertight parametric model for any pipeline. It relies on the ability to build a parametric model for any single shape supported for the pipeline reconstruction: cylinders (straight pipes), tori (elbows), asymmetric cones (reducers), self-intersecting pairs of cylinders (branches), etc. The ending interface of a pipe can be used to constrain the parameters of the subsequent connected pipes.

For instance, two consecutive pipes must share a common radius for the whole model to be watertight. Once the first radius is set, the second one is no longer a "free" parameter. These constraints can be built by relying on the fact that connected pipes share a common interface. The ending interface of a pipe is exactly the starting interface of the next pipe. In this way, for each new parametric shape in the model, a set of constrained parameters is defined that won't change through the optimization process. Those parameters are inherited from the former pipes in the line.

Using the common "interfaces" (pipe ending geometry) as constraints carriers has also the advantage that the method according to this invention has not to deal with all the possible pipe combinations (e.g. cylinders vs. elbows, elbows vs. reducers, etc.). All the pipes have circular endings, that can be used as a support to provide constraints to the next shape, whatever its type. This makes this embodiment advantageously easy to maintain, as the user does not have to worry about the combinatorial explosion when a new pipe type is added. It is sufficient to translate each pipe type into a parametric model whose constraints can be provided as an starting interface.

The exact same approach could be used for any structured collection of parametric shapes to fit to a point cloud, not only pipelines. For instance, the invention can be extended to steel structures. For example, adjacency constraints can be transformed into geometric constraints applying to the parametric space. Thus, the approach does not depend on the shape to be fitted. This makes it easy to extend the invention (e.g. add new pipe types) or reuse in a totally different context.

In a further embodiment, the geometric parameters can be derived for cylinders, cones, torus sections, and/or intersections.

Alternatively or additionally, the geometric parameters can comprise length, position, orientation, starting direction, tangent point, cylinder radius, cone radius, cone angle, truncated cone height, asymmetric cone offset, elbow angle, elbow inner radius, and/or elbow curve radius.

In a further embodiment, a position of the subsequent part can be constrained by a position and/or a tangent point of the preceding part, and/or a starting direction of the subsequent part can be constrained by an orientation of the preceding part. Optionally, a radius of the subsequent part can be constrained by a radius of the preceding part, in particular wherein the radius of the subsequent part can be set equal to the radius of the preceding part. Optionally, a cylinder radius of the subsequent part can be constrained by a cylinder radius or a cone radius of the preceding part, and/or a cone radius of the subsequent part can be constrained by a cone radius or a cylinder radius of the preceding part.

In a further embodiment, the method can further comprise acquiring statistical information related to at least one detected part of the plurality of parts; and displaying the statistical information. Optionally, the statistical information can comprise a standard deviation and/or a maximum deviation of the set of points assigned to the at least one detected part of the plurality of parts and a predefined geometric shape related to the at least one detected part of the plurality of parts to which the set of points are assigned.

In other words, for each part statistical parameters, i.e. the standard deviation or the maximum deviation of the points to the geometric element, can be displayed. This provides the user an overview on how well the points assigned to a part fit to its geometric representation.

In a further embodiment, the method can further comprise acquiring a further constraint for at least one of the geometric parameters of the subsequent part physically connected to the preceding part; and/or removing a false constraint for at least one of the geometric parameters of the subsequent part physically connected to the preceding part. Optionally, the further constraint can be provideable and/or the false constrait can be deletable by a manual input of a user.

In a further embodiment, the method can further comprise displaying the detected parts of the plurality of parts and/or the constraints for at least one of the geometric parameters of subsequent parts physically connected to preceding parts.

Optionally, the detected parts of the plurality of parts and/or the constraints can be displayed in an overlayed representation with specific symbols.

In other words, the constraints between the geometric elements (cylinder, torus, etc.) can be visualized in an overlayed representation with specific symbols, e.g. for same radius or tangent point, etc. This provides the user an overview of what constraints have been identified and used in the optimization. Optionally, the constraints should be editable, i.e. the user can delete false constraints and add missing ones manually.

In a further embodiment, the method can be performed by a computing unit of a reality-capture device, particularly wherein the computing unit can be configured to control the acquisition of the point cloud by the reality-capture device, wherein the point cloud data describing the point cloud can be provided to the computing unit; and/or the geometry information can comprise 3D coordinates of the points of the point cloud.

The present invention further relates to a reality-capture device comprising a sensor unit configured to acquire points in an environment as a point cloud, and a computing unit configured to control the acquisition of the point cloud, wherein point cloud data describing the point cloud are providable to the computing unit, particularly wherein the sensor unit comprises a LiDAR unit or a plurality of ToF-cameras, wherein the computing unit has program code stored for performing the method according to any one of the previously mentioned embodiments.

The present invention further relates to a computer program product comprising program code, which is stored on a machine-readable medium, or being embodied by an electromagnetic wave comprising a program code segment, and having computer-executable instructions for performing, particularly when executed in a computing unit of a reality-capture device as previously mentioned, the method according to any one of the previously mentioned embodiments.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figure 1 shows how geometric parameters of the subsequent part are constrained by geometric parameters of the preceding part according to an exemplary embodiment of the inventive method.
Figure 2A and 2B show shematic illustrations of prior art of approaches used in prior art methods.
Figure 3 shows a parametric model of a pipeline system created by a heuristic prior art approach.
Figure 4 shows a shematic illustration of the optimization step according to an exemplary embodiment of the inventive method.
Figure 5 shows how detected parts and constraints for the geometric parameters are visualized according to an exemplary embodiment of the inventive method.
Figure 6 shows how values for geometric parameters are set according to an exemplary embodiment of the inventive method.
Figure 7 shows an shematic illustration of a catalog used to set geometric parameters.
Figure 8 shows a shematic illustration of an exemplary embodiment of the reality-capture device according to the invention acquiring points in the environment in which the physical structure is located.
Figure 9 shows a process diagram illustrating the steps of the method according to the invention.

### DETAILED DESCRIPTION OF THE DRAWINGS

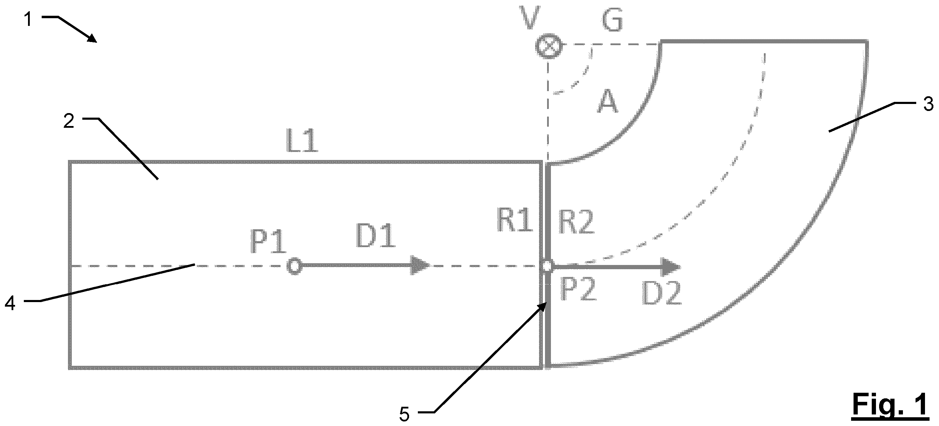

**Figure 1** shows how geometric parameters of the subsequent part 3 are constrained by geometric parameters of the preceding part 2 according to an exemplary embodiment of the inventive method 1. In the example shown, the physical structure to be modeled is a pipeline system in which the preceding part 2 is a straight pipe and the subsequent part 3 is a curved / bent pipe. Accordingly, the geometric shape of a cylinder can be assigned to the straight pipe 2 and the geometric shape of an elbow can be assigned to the curved pipe 3.

In the example shown, the cylinder has no constraint. For example, the cylinder has the geometric parameters (inner) radius R1, length L1, position P1 and orientation D1. The orientation D1 can be determined, for example, by the extension of the central axis 4 of the cylinder in three-dimensional space / environment or in a Cartesian coordinate system (assigned to three-dimensional space) (according to the step: acquiring information regarding an orientation of at least one detected part of the plurality of parts in a Cartesian coordinate system).

In other words, besides the pipe parameters, the pipe orientation/alignment D1 can also be constrained. For example, there are situations where the pipes in a facility have to be strictly horizontal or vertical. This generic constraints can also be plugged into the optimization algorithm to give again more control about the structure of the pipe system to be built.

The ellbow 3 has free parameters that are not constrained by the geometric parameters of the cylinder 2, e.g. the ellbow radius (also known as the elbow curve radius or great radius) G or the ellbow angle A. Due to the physical connection 5 of the two pipe parts 2, 3, some geometric parameters of the ellbow are constrained, e.g. the revolution axis V, which is restricted in that it must be orthogonal to D1, the inner radius R2, which is set equal to the inner radius of the cylinder R1, position P2 or the starting direction D2, which is derived from the direction D1.

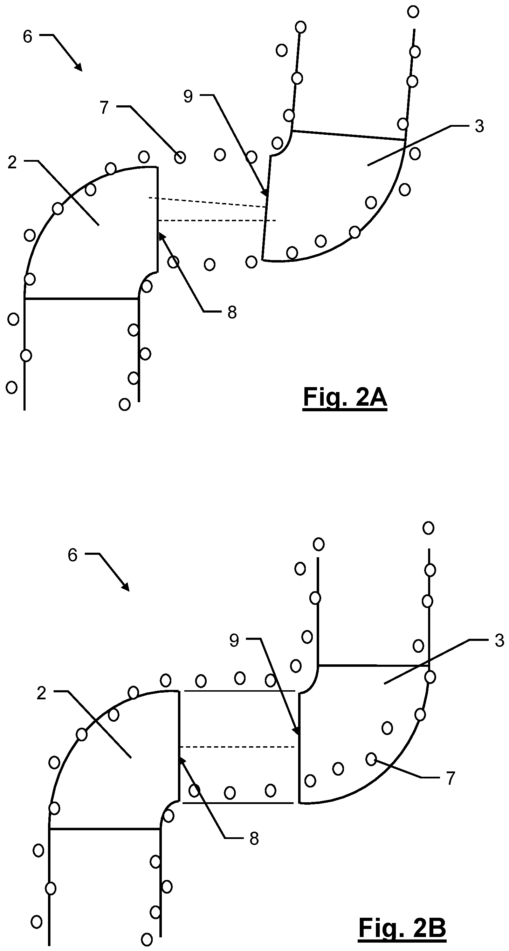

**Figure 2A and 2B** show shematic illustrations of approaches used in prior art methods. In the approach shown in **Figure 2A****,** the parametric model 6 of a pipeline system is rigidly created beased on the points 7 of the point cloud. However, misalignment/misposition of line endings 8, 9 of the parts 2, 3 to be connected can occur. Accordingly, the model 6 must be subsequently corrected accordingly, in particular one of the pipelines 2, 3 has to be updated in its entierety for the connection of the line endings 8, 9 to be possible.

**Figure 2B****,** on the other hand, shows a heuristic approach in which a rigid transformation to the second pipeline 3 without taking the points 7 into consideration makes the pipelines 2 and 3 connectable, but the second pipeline 3 no longer matches the point cloud.

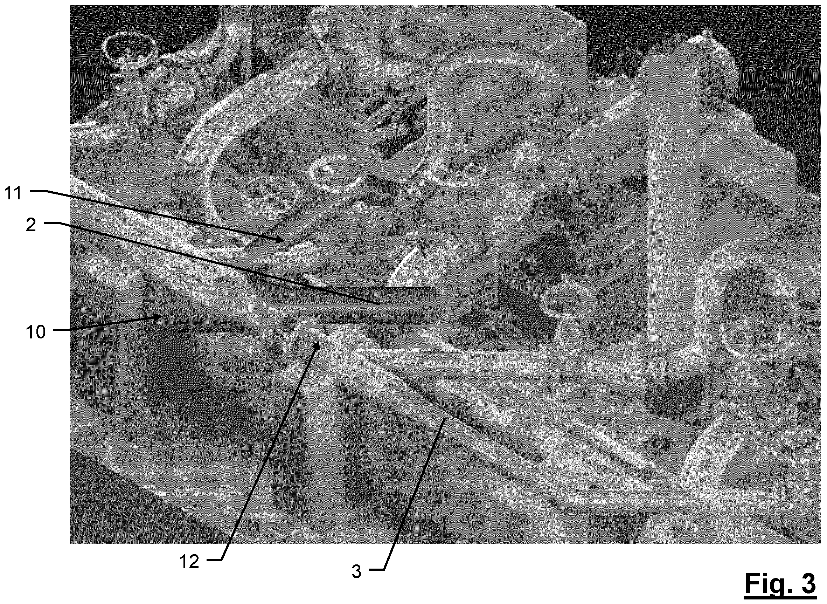

**Figure 3** shows a parametric model of a pipeline system that was created using a heuristic prior art approach. The model 10 of the pipeline section 11, which includes the pipeline part 2, was created using a heuristic prior art method as exemplarily shown in Figure 2B. Although the parts are connected to each other without gaps, the misalignment/misposition of the line endings shown above continued over the entire pipeline section 11 respectively even added up, resulting in the pipeline section 2 deviating completely from the points 12 of the point cloud. Pipeline section 2 is even directed in a completely different direction, which is why a logical link with pipeline section 3 is no longer possible. The model generated in this way has to be laboriously reworked and corrected by the user.

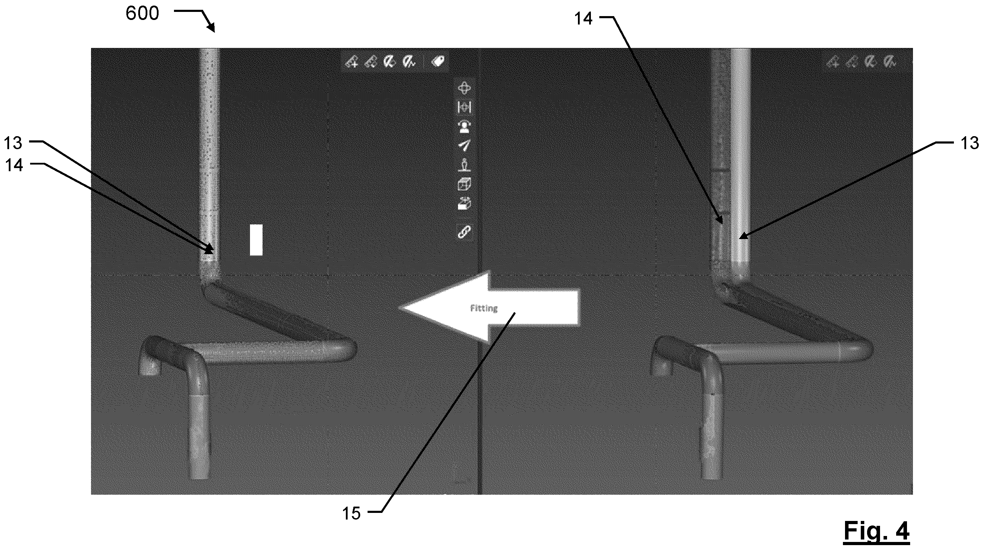

**Figure 4** shows a shematic illustration of the optimization step 600 (optimizing the generated parametric model of the physical structure with respect to the point cloud) according to an exemplary embodiment of the inventive method 1. An initially created parametric model 13 of a pipeline system is shown on the right, which was created using the constraint approach according to the invention. There is a slight deviation of the model 13 from the points 14 of the point cloud.

The parts of the piping system as shown are grouped into a sub-section (according to the step: grouping together two or more detected parts of the plurality of parts that are physically connected to form a subsection), this sub-section is grouped into a sub-section group (according to the step: grouping one or more subsections into a subsection group), and then this sub-section of the sub-section group is optimized (according to the step: optimizing all subsections of a subsection group jointly).

On the left is shown the result after the optimization process 15, in which the geometric parameters (radii, lengths, orientations, etc.) have been reevaluated to minimize the distance to the points 14.

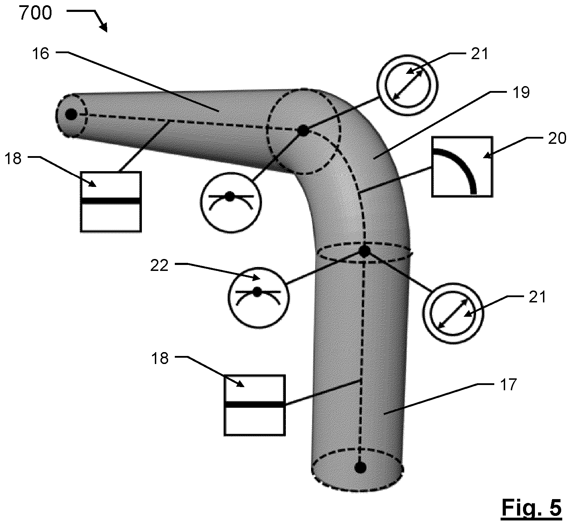

**Figure 5** shows how detected parts and constraints for the geometric parameters are visualized according to an exemplary embodiment of the inventive method 1 (according to the step 700: displaying the detected parts of the plurality of parts and/or the constraints for at least one of the geometric parameters of subsequent parts physically connected to preceding parts). For example, the two detected/identified straight pipes 16, 17 are illustrated with the symbol 18, the elbow 19 with the symbol 20, the identified constraint "same radius / diameter" with the symbol 21 and the constraint "same tangent point" with the symbol 22. This exemplary illustration can be shown to the user on a display/user interface, for example.

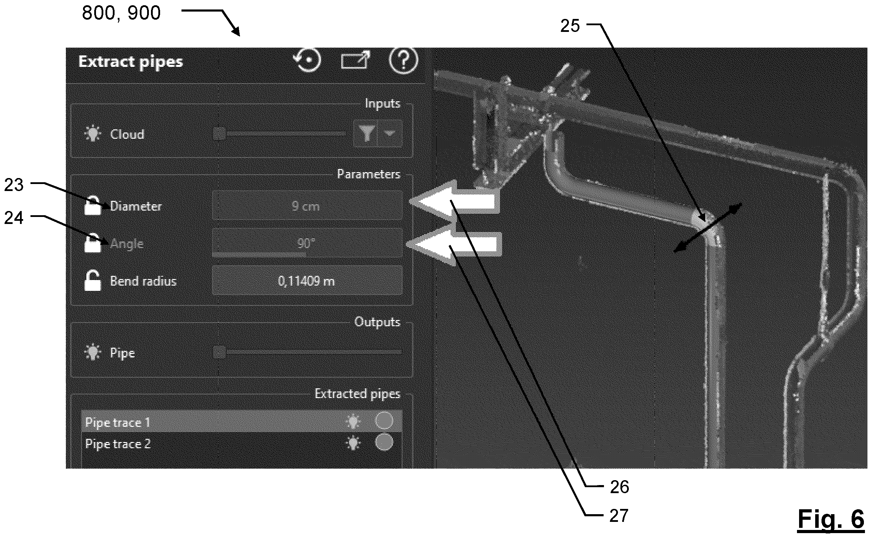

**Figure 6** shows how values for geometric parameters are set according to an exemplary embodiment of the inventive method 1. In the shown exemplary embodiment, the user can manually enter geometric parameters 23, 24 known to the user for certain parts 25 (according to the step 800: acquiring a value for at least one geometric parameter of at least one detected part of the plurality of parts, in particular wherein the value for the at least one geometric parameter is provideable by a manual input of a user) and set / lock them (according to the step 900: setting the value for the at least one geometric parameter so that the value for the at least one geometric parameter is not changed by the optimizing 600).

The locked parameters inner diameter 23 and bending angle 24 of the selected elbow 25 visualized with the arrows 26, 27 shall not be modified by the optimization algorithm. They must be left unchanged during the whole reconstruction process, including the global fittign algorithm, unless they are explicitely «unlocked».

In other words, in the depicted embodiment, the user can provide some knowledge for the global fitting, by locking some of the pipe parameters 23, 24 explicitly. For instance, when extracting an elbow 25 in the preparation step, the user could specify that the elbow angle 24 has to be 90 degrees or the diameter 23 must be exactly 9 cm. Once those parameters 23, 24 are locked, the global fitting algorithm can then leverage this information, to keep those parameters 23, 24 unchanged during the optimization process.

In terms of feature and user experience, this embodiment gives the user more control over the behavior of the fitting algorithm and about the structure of the piping system to be built and optimized. The user can preserve values for the pipes that are known.

As the number of constrained parameters increases, the number of "free parameters" to be found by our optimizer decreases (since the number of parameters is constant). Thus, this embodiment makes arising problems more easy to tackle and speeds up the optimization process.

Based on this embodiment, the following workflow could be carried out: [1] the user clicks a pipe to be constrained; [2] sets the relevant values for the parameters to be constrained (e.g. radius, angles, etc.); and [3] lock the parameter to let the optimizer know that the corresponding parameter is not to be optimized and should be left unchanged.

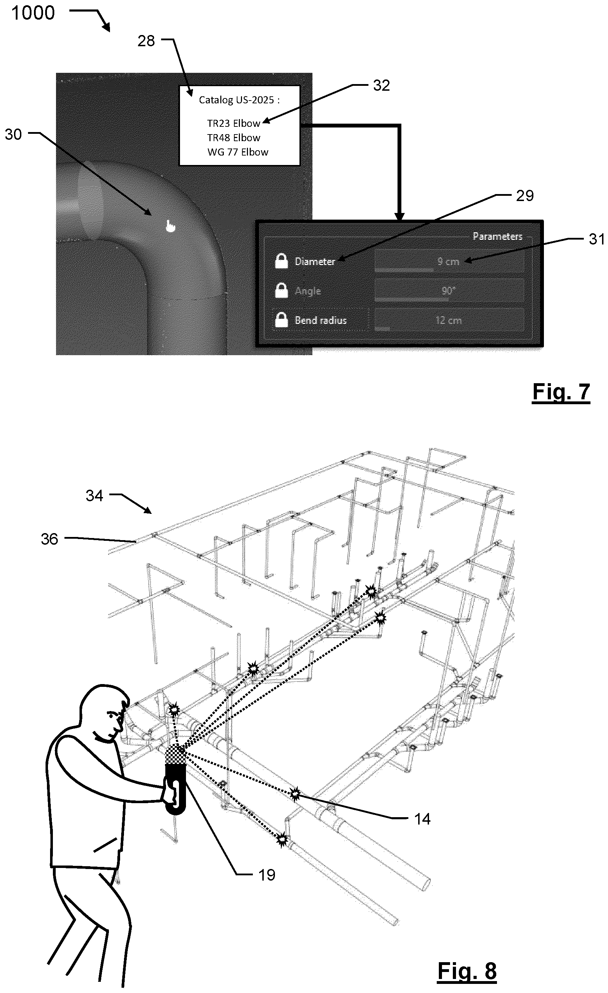

**Figure 7** shows an shematic illustration of a catalog 28 used to set geometric parameters 29. In the depicted embodiment of method 1, the user can click on a part, here e.g. a pipe elbow 30, which opens the catalog 28 with potential pipe elbows 32. The selection of the correct pipe elbow and the subsequent derivation of values 31 for the geometric parameters 29 can then be carried out, for example, by the user manually selecting a pipe elbow 32 listed in the catalog 28 or by an automatic comparison of the clicked elbow 30 with the elbows 32 listed in the catalog 28 (according to the step 1000: the value for the at least one geometric parameter is derivable from a comparison of the at least one detected part of the plurality of parts with a catalog of parts that are usable for a construction of the physical structure).

The pipe elements in plants are usually not random. They come from a set of manufactured pipes that are a provided by industrial suppliers. Hence the set of pipes available can be limited to a well-known catalog of pipes, giving some hints about the pipes that were implemented in the facility.

So, instead of letting the user provide single constraints manually, the user [1] clicks on a pipe to be specified; and [2] gets the set of pipes displayed in predefined catalogs, that seem relevant regarding the selected pipe. Then, the user can [3] pick an element in the catalog to replace and lock the pipe parameters.

At the end of this preparation step, the global fitting approach will be fed with many additional constraints it can handle. In other words, these catalogs provide the user more control over the fitting algorithm.

In other words, the pipes can be bound to a catalog entry by the user. Once the pipe is defined as a piece within a catalog, its parameters can be updated and locked accordingly which allows the user to easily add predefined constraint (comming from industry standards) for the global fitting.

**Figure 8** shows a shematic illustration of an exemplary embodiment of the reality-capture device 33 according to the invention acquiring points 14 in the environment 34 in which the physical structure 36 is located.

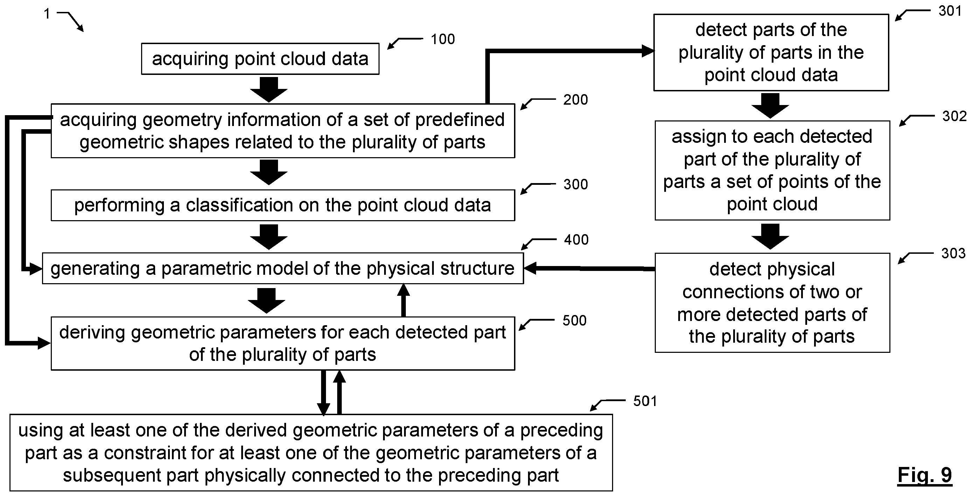

**Figure 9** shows a process diagram/ flow chart illustrating the steps of the computer-implemented method 1 according to the invention. The computer-implemented method 1 for generating a parametric model 13 of a physical structure 36 based on point cloud data comprises the steps:
- acquiring the point cloud data 100, the point cloud data comprising geometry information of the environment 34;
- acquiring geometry information of a set of predefined geometric shapes related to the plurality of parts 200;
- performing a classification on the point cloud data 300 to
   ∘ detect parts of the plurality of parts in the point cloud data 301 based on the geometry information;
   ∘ assign to each detected part of the plurality of parts a set of points of the point cloud 302; and
   ∘ detect physical connections 5 of two or more detected parts 2, 3 of the plurality of parts 303;
- generating a parametric model 13 of the physical structure 36 (step 400) based on the detected physical connections 5 of the two or more detected parts 2, 3 of the plurality of parts and the geometry information of the set of predefined geometric shapes, and
- deriving geometric parameters 23, 24, 29 for each detected part 2, 3 of the plurality of parts 500 from the geometry information of the set of predefined geometric shapes.

The step 400 of generating the parametric model 13 of the physical structure 36 is further based on the derived geometric parameters 23, 24, 29 for each detected part 2, 3 of the plurality of parts, wherein at least one of the derived geometric parameters 23, 24, 29 of a preceding part 2 is used as a constraint 501 for at least one of the geometric parameters 23, 24, 29 of a subsequent part 3 physically connected to the preceding part 2.

The point cloud data describing the point cloud comprises points 14 acquired in the environment 34 in which the physical structure 36 is located, wherein the physical structure 36 comprises a plurality of parts, wherein the plurality of parts are arranged as an interconnected chain of parts that are physically connected.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (1) for generating a parametric model (13) of a physical structure (36) based on point cloud data, the point cloud data describing a point cloud comprising points (14) acquired in an environment (34) in which the physical structure (36) is located, wherein the physical structure (36) comprises a plurality of parts, wherein the plurality of parts are arranged as an interconnected chain of parts that are physically connected, the method (1) comprising:
• acquiring the point cloud data (100), the point cloud data comprising geometry information of the environment (34);
• acquiring geometry information of a set of predefined geometric shapes related to the plurality of parts (200);
• performing a classification on the point cloud data (300) to
∘ detect parts (2, 3) of the plurality of parts in the point cloud data (301) based on the geometry information;
∘ assign to each detected part (2, 3) of the plurality of parts a set of points of the point cloud (302); and
∘ detect physical connections (5) of two or more detected parts (2, 3) of the plurality of parts (303); and
• generating a parametric model (13) of the physical structure (36) (400) based on the detected physical connections (5) of the two or more detected parts (2, 3) of the plurality of parts and the geometry information of the set of predefined geometric shapes,
**characterized in that**
the method (1) further comprises deriving geometric parameters (23, 24, 29) for each detected part (2, 3) of the plurality of parts (500) from the geometry information of the set of predefined geometric shapes, wherein generating the parametric model (13) of the physical structure (36) is further based on the derived geometric parameters (23, 24, 29) for each detected part (2, 3) of the plurality of parts, wherein at least one of the derived geometric parameters (23, 24, 29) of a preceding part (2) is used (501) as a constraint for at least one of the geometric parameters (23, 24, 29) of a subsequent part (3) physically connected to the preceding part (2).

2. Method (1) according to claim 1, wherein the at least one of the geometric parameters (23, 24, 29) of the subsequent part (3) physically connected to the preceding part (2) is constrained by the at least one of the geometric parameters (23, 24, 29) of the preceding part (2) by setting equal geometric parameters (23, 24, 29) being the same in the preceding part (2) and the subsequent part (3).

3. Method (1) according to any one of the preceding claims, wherein the method (1) further comprises optimizing the generated parametric model (13) of the physical structure (36) with respect to the point cloud (600), in particular wherein optimizing (600) the generated parametric model (13) of the physical structure (36) comprises weighted least squares.

4. Method (1) according to claim 3, wherein the optimizing (600) is performed
• based on the constraint for the at least one of the geometric parameters (23, 24, 29) of the subsequent part (3) physically connected to the preceding part (2); and/or
• by reducing, for at least one point of the set of points assigned to a detected part (2, 3) of the plurality of parts, a distance between the at least one point and
∘ a predefined geometric shape related to the detected part (2, 3) of the plurality of parts to which the set of points comprising the at least one point is assigned; and/or
∘ the generated parametric model (13) of the physical structure (36).

5. Method (1) according to claim 3 or 4, wherein the method (1) further comprises
• grouping together two or more detected parts (2, 3) of the plurality of parts that are physically connected to form a subsection;
• grouping one or more subsections into a subsection group; and
• optimizing all subsections of a subsection group jointly,
in particular wherein grouping together at least two detected parts (2, 3) of the plurality of parts and/or grouping one or more subsections into a subsection group is provideable by a manual input of a user.

6. Method (1) according to one of the claims 3 to 5, wherein the method (1) further comprises
• acquiring a value for at least one geometric parameter (23, 24, 29) of at least one detected part (2, 3) of the plurality of parts (800); and
• setting (900) the value for the at least one geometric parameter (23, 24, 29) so that the value for the at least one geometric parameter (23, 24, 29) is not changed by the optimizing (600),
in particular wherein the value for the at least one geometric parameter (23, 24, 29) is provideable by a manual input of a user and/or is derivable from a comparison (1000) of the at least one detected part (2, 3) of the plurality of parts with a catalog (28) of parts that are usable for a construction of the physical structure (36).

7. Method according to one of the claims 3 to 6, wherein the method (1) further comprises
• acquiring information regarding an orientation of at least one detected part (2, 3) of the plurality of parts in a Cartesian coordinate system; and
• if the orientation of the at least one detected part (2, 3) of the plurality of parts meets a predefined criterion, in particular an orientation parallel to one of the axis of the Cartesian coordinate system, setting the orientation of the at least one detected part (2, 3) of the plurality of parts so that the orientation of the at least one detected part (2, 3) of the plurality of parts is not changed by the optimizing (600),
in particular wherein the orientation of the at least one detected part of the plurality of parts in the Cartesian coordinate system is provideable by a manual input.

8. Method (1) according to one of the claims 3 to 7, wherein in course of the optimizing (600)
• the two or more detected parts (2, 3) of the plurality of parts for which physical connections (5) have been detected are not separable from each other in the generated parametric model (13) of the physical structure (36); and/or
• at least one detected part (2, 3) of the plurality of parts is interchangeable with a part from a catalog (28) of parts that are usable for a construction of the physical structure (36); and/or
• at least one detected part (2, 3) of the plurality of parts is removable from the generated parametric model (13) of the physical structure (36); and/or
• a part from the catalog (28) of parts that are usable for the construction of the physical structure (36) is insertable in the generated parametric model (13) of the physical structure (36).

9. Method (1) according to any one of the preceding claims, wherein the classification on the point cloud data comprises point cloud classification, in particular wherein the point cloud classification comprises
• artificial intelligence;
• semantic segmentation; and/or
• instance segmentation.

10. Method (1) according to any one of the preceding claims, wherein the set of predefined geometric shapes comprises
• cylinders;
• cones, in particular truncated asymmetric cones;
• torus sections; and/or
• intersections,
in particular wherein, if the physical structure (36) is configured as a pipeline system, cylinders are related to straight pipes, cones are related to reducers or expansions, torus sections are related to pipe elbows, and/or intersections are related to pipe branches.

11. Method (1) according to any one of the preceding claims, wherein the method (1) further comprises
• acquiring statistical information related to at least one detected part (2, 3) of the plurality of parts; and
• displaying the statistical information;
in particular wherein the statistical information comprises a standard deviation and/or a maximum deviation of the set of points assigned to the at least one detected part (2, 3) of the plurality of parts and a predefined geometric shape related to the at least one detected part (2, 3) of the plurality of parts to which the set of points are assigned.

12. Method (1) according to any one of the preceding claims, wherein the method (1) further comprises
• acquiring a further constraint for at least one of the geometric parameters (23, 24, 29) of the subsequent part (3) physically connected to the preceding part (2); and/or
• removing a false constraint for at least one of the geometric parameters (23, 24, 29) of the subsequent part (3) physically connected to the preceding part (2),
in particular wherein the further constraint is provideable and/or the false constrait is deletable by a manual input of a user.

13. Method (1) according to any one of the preceding claims, wherein the method (1) further comprises displaying (700) the detected parts (2, 3) of the plurality of parts and/or the constraints for at least one of the geometric parameters (23, 24, 29) of subsequent parts (3) physically connected to preceding parts (2), in particular wherein the detected parts (2, 3) of the plurality of parts and/or the constraints are displayed in an overlayed representation with specific symbols (18, 20, 21, 22).

14. Reality-capture device (33) comprising a sensor unit configured to acquire points (14) in an environment (34) as a point cloud, and a computing unit configured to control the acquisition of the point cloud, wherein point cloud data describing the point cloud are providable to the computing unit, particularly wherein the sensor unit comprises a LiDAR unit or a plurality of ToF-cameras,
**characterized in that**
the computing unit has program code stored for performing the method (1) according to any one of the preceding claims.

15. Computer program product comprising program code, which is stored on a machine-readable medium, or being embodied by an electromagnetic wave comprising a program code segment, and having computer-executable instructions for performing, particularly when executed in a computing unit of a reality-capture device (33) according to claim 14, the method (1) according to any one of claims 1 to 13.
